# FASCICULE DE BREVET EUROPEEN

(11) **EP 3 883 077 B1**
(45) Date de publication et mention de la délivrance du brevet: **12.03.2025**
(21) Numéro de dépôt: 21163753.3
(22) Date de dépôt: 19.03.2021
(51) Int. Cl.: H02H 1/04, H02H 3/05, H02H 3/093, H02H 3/33

(54) **APPAREILS DE PROTECTION ÉLECTRIQUE ET PROCÉDÉS ASSOCIÉS**
GERÄTE ZUM ELEKTRISCHEN SCHUTZ UND ENTSPRECHENDE VERFAHREN
ELECTRICAL PROTECTION DEVICES AND RELATED METHODS

(30) Priorité: 19.03.2020 FR 2002698
(43) Date de publication de la demande: 22.09.2021
(73) Titulaire: Schneider Electric Industries SAS, 92500 Rueil-Malmaison (FR)
(72) Inventeur: BORDET, Bruno, 38000 GRENOBLE (FR); STEPANEK, Jiri, 38000 GRENOBLE (FR)
(74) Mandataire: Lavoix

(56) Documents cités:
- EP-A1- 2 352 213
- EP-A1- 3 232 526
- EP-A1- 3 471 228

## Description

Des aspects de l'invention se rapportent notamment à des appareils de protection électrique et des procédés de fonctionnement associés.

Dans le domaine de la protection électrique, il est connu d'utiliser des appareils de protection différentielle pour protéger des installations de distribution électrique en cas d'apparition d'un courant de défaut différentiel.

Par exemple, un appareil de commutation électrique, tel qu'un disjoncteur différentiel, peut comporter un dispositif de détection conçu pour identifier l'apparition d'un courant de défaut dans un conducteur électrique de l'installation et, en réponse, déclencher l'appareil de commutation pour interrompre la circulation du courant dans le conducteur.

L'évolution des besoins et des contraintes normatives conduisent à concevoir des dispositifs de détection capables de réagir à l'apparition d'un défaut électrique avec un temps de réponse très court, par exemple inférieur ou égal à 40 millisecondes.

Toutefois, il est souhaitable d'éviter un déclenchement prématuré ou non justifié, car cela pourrait avoir des conséquences adverses sur le fonctionnement de l'installation électrique. De tels déclenchements prématurés peuvent être causés par des phénomènes électriques transitoires parasites de courte durée.

Enfin, ces dispositifs doivent être simples à fabriquer et à intégrer dans des appareils de commutation ou de protection électrique, tels que des disjoncteurs différentiels. Leur consommation électrique doit également être modérée.

C'est à ces inconvénients qu'entend plus particulièrement remédier l'invention en proposant un dispositif de détection et un appareil de protection électrique comportant un tel dispositif de détection.

A cet effet, un aspect de l'invention concerne un appareil de protection électrique tel que défini par la revendication 1.

L'ajout d'une surconsommation temporaire d'énergie par le circuit de traitement permet de diminuer de façon contrôlée la quantité d'énergie stockée dans la réserve d'énergie, et donc de retarder l'émission d'un signal de déclenchement. Cela permet d'éviter un déclenchement intempestif de l'appareil causé par des phénomènes parasites de courte durée, tout en garantissant qu'un signal de déclenchement sera néanmoins émis en cas de défaut avéré.

Selon des aspects avantageux mais non obligatoires, un tel dispositif de détection peut incorporer une ou plusieurs des caractéristiques suivantes, prises isolément ou suivant toute combinaison techniquement admissible :
- L'appareil est configuré pour, suite à la détection de l'apparition d'un courant de défaut, attendre pendant une durée de retard prédéterminée avant de commencer à consommer une quantité prédéfinie d'énergie stockée dans la réserve d'énergie.
- La durée de retard prédéterminée est comprise entre 1ms et 4ms, de préférence égale à 2ms.
- L'appareil est configuré pour consommer la quantité prédéfinie d'énergie stockée dans la réserve d'énergie seulement pendant une durée prédéfinie.
- L'appareil comporte une résistance et un interrupteur configuré pour sélectivement connecter la résistance à la réserve d'énergie, pour consommer ladite quantité prédéfinie d'énergie stockée dans la réserve d'énergie.
- L'appareil comporte en outre un générateur d'impulsion couplé à l'interrupteur et configuré pour connecter la résistance uniquement pendant la durée d'une impulsion émise par le générateur d'impulsion.
- Le capteur de courant comporte un tore de mesure.
- La réserve d'énergie comporte un condensateur.
- L'appareil de protection comporte en outre un mécanisme de commutation configuré pour ouvrir des contacts électriques séparables aptes à être associés à un conducteur électrique d'une installation électrique, ledit mécanisme de commutation étant configuré pour être déclenché lorsque la condition de déclenchement est identifiée.

Selon un autre aspect, le procédé de détection d'un défaut électrique mis en œuvre par un appareil de protection électrique comporte des étapes selon la revendication 10.

L'invention sera mieux comprise et d'autres avantages de celle-ci apparaîtront plus clairement à la lumière de la description qui va suivre d'un mode de réalisation d'un appareil de protection électrique et d'un procédé de fonctionnement associé donnée uniquement à titre d'exemple et faite en référence aux dessins annexés, dans lesquels :
[Fig 1] la figure 1 est un schéma synoptique d'un appareil de protection électrique utilisé dans une installation électrique et comportant un dispositif de détection conforme à des modes de réalisation de l'invention ;
[Fig 2] la figure 2 est un graphique représentant une tension électrique aux bornes d'une réserve d'énergie du dispositif de détection de la figure 1 donnée en fonction du temps ;
[Fig 3] la figure 3 est un schéma simplifié d'une impulsion de courant générée par le dispositif de détection de la figure 1 ;
[Fig 4] la figure 4; est un schéma électrique illustrant un mode de mise en œuvre du dispositif de détection de la figure 1 ;
[Fig 5] la figure 5 est un diagramme fonctionnel illustrant une partie du dispositif de détection de la figure 4 ;
[Fig 6] la figure 6 est un diagramme illustrant une méthode de détection d'un défaut électrique conforme à des modes de réalisation de l'invention.

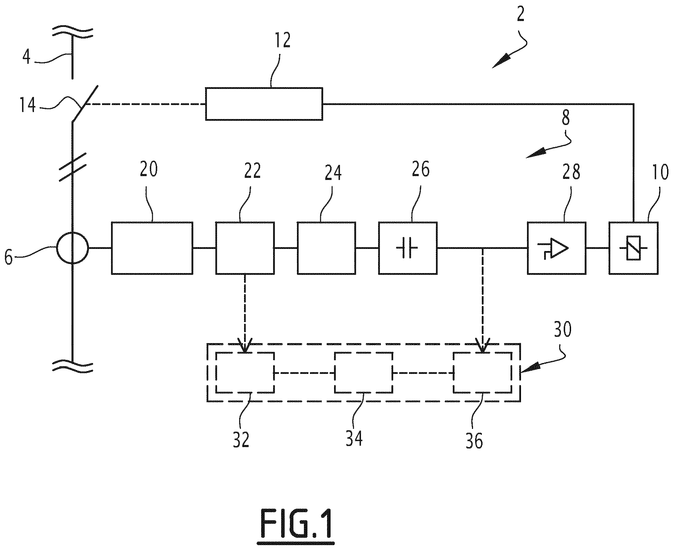

La figure 1 représente un appareil 2 de protection électrique, tel qu'un appareil de protection différentielle.

L'appareil 2 peut notamment être utilisé dans une installation électrique, telle qu'une installation de distribution d'électricité, pour détecter un défaut électrique différentiel entre des conducteurs électriques 4 de l'installation électrique.

Par exemple, l'installation électrique est configurée pour distribuer un courant électrique alternatif.

De façon générale, selon des modes de mise en œuvre de l'invention, l'appareil 2 est configuré pour détecter et réagi à un défaut différentiel avec un temps de réponse très court, par exemple inférieur ou égal à 40 millisecondes (ms), tout en étant immunisé contre des phénomènes électriques parasites de courte durée, par exemple inférieurs à 10 ms, afin d'éviter des déclenchements intempestifs.

L'appareil 2 comporte un capteur 6 et un circuit de traitement 8 connecté en sortie du capteur 6. Le capteur 6 et le circuit de traitement 8 forment ensemble un dispositif de détection de l'appareil 2.

Le capteur 6 est configuré pour mesurer un courant de défaut différentiel entre deux conducteurs électriques 4. Lorsque l'appareil 2 est en service, le capteur 6 est couplé aux conducteurs électriques 4, par exemple monté autour des conducteurs électriques 4.

Selon des exemples de mise en œuvre, le capteur 6 comprend un tore magnétique autour duquel est enroulé une bobine. En présence d'un courant de défaut différentiel, une tension électrique apparaît entre les bornes de la bobine et forme le signal de mesure délivré en sortie du capteur 6. Cette tension électrique est représentative du courant de défaut différentiel entre les conducteurs 4.

En pratique, comme le courant électrique primaire circulant dans les conducteurs 4 est un courant alternatif, la tension délivrée par le capteur 6 n'est pas toujours constante et peut varier au cours du temps.

Par exemple, chaque demi-période du courant primaire peut être découpée entre une première phase de fonctionnement et une deuxième phase de fonctionnement.

Dans la première phase, le capteur 6 fonctionne comme un générateur de courant. La première phase se termine lorsque le tore magnétique du capteur 6 arrive à saturation.

Dans la deuxième phase, le capteur 6 génère une tension pour restituer au moins une partie de l'énergie magnétique stockée dans l'enroulement. La deuxième phase se termine lorsque la demi-période du courant primaire se termine.

Par exemple, pour des courants alternatifs de fréquence égale à 50Hz ou à 60Hz, la demi-période maximale du courant primaire est égale à 10 ms.

Le circuit de traitement 8 est configuré pour générer un signal de déclenchement lorsqu'un courant de défaut électrique est mesuré par le capteur 6.

Le signal de déclenchement est ensuite utilisé par l'appareil 2 pour interrompre la circulation du courant dans le conducteur 4.

Selon des exemples de mise en œuvre, l'appareil 2 comporte en outre un relais 10, un mécanisme de commutation 12 et des contacts électriques séparables 14 couplés au conducteur 4.

Le relais 10 est connecté en sortie du circuit de traitement 8 et est configuré pour actionner le mécanisme de commutation 12 dès qu'il reçoit le signal de déclenchement émis par le circuit de traitement 8.

Le relais 10 peut être un relais électromécanique, afin de ne consommer que peu d'énergie pour son fonctionnement.

Le mécanisme de commutation 12 est configuré pour, une fois actionné, commuter les contacts électriques séparables 14 depuis un état fermé et électriquement conducteur vers un état ouvert empêchant la circulation du courant dans le ou les conducteurs 4.

En variante, le relais 10, le mécanisme 12 et les contacts électriques séparables 14 peuvent être remplacés par un composant ayant une fonctionnalité équivalente, par exemple un relais à l'état solide, tel qu'un transistor.

De préférence, l'appareil 2 est un appareil autoalimenté en énergie électrique, aussi nommé appareil « à propre courant ». Par exemple, le circuit de traitement 8 est alimenté électriquement uniquement en prélevant une partie de la puissance électrique délivrée par le capteur 6.

Notamment, le circuit de traitement 8 n'est pas alimenté en énergie électrique par l'intermédiaire d'un dispositif d'alimentation électrique dédié, tel qu'un convertisseur de puissance alimenté par l'installation électrique (par exemple via un branchement sur les conducteurs 4) ou par une source d'alimentation embarquée telle qu'une batterie. L'appareil 2 n'a donc pas besoin de comporter des équipements de conversion de puissance.

Selon des modes de mise en œuvre, le circuit de traitement 8 peut être implémenté par un ou plusieurs circuits électroniques, comportant un ou plusieurs composants discrets analogiques et/ou par un ou plusieurs circuits intégrés. Le circuit de traitement 8 peut également comporter un processeur, tel qu'un microcontrôleur.

Selon des variantes, le circuit de traitement 8 peut comporter un processeur de traitement du signal (DSP), ou un composant logique reprogrammable (FPGA), ou un circuit intégré spécialisé (ASIC), ou tout élément équivalent.

Dans l'exemple illustré, le circuit de traitement 8 comporte un étage de protection et de redressement 20, un étage d'écrêtage 22, un étage de traitement 24, une réserve d'énergie 26 rechargeable et un comparateur 28.

Les étages 20, 22 et 24 sont configurés pour filtrer et/ou traiter le signal de mesure provenant du capteur 6. L'étage 24 permet de modifier le comportement dynamique du circuit de traitement 8 afin de respecter des temps de déclenchement normalisés.

Dans l'exemple illustré, l'étage 20 est placé en entrée du circuit 8 et reçoit le signal de mesure issu du capteur 6. Les étages 20, 22 et 24 sont connectés en série les uns derrière les autres.

Les étages 20, 22 et 24 peuvent être construits de façon conventionnelle et ne sont pas décrits plus en détail dans ce qui suit.

La réserve d'énergie 26 est configurée pour accumuler l'énergie provenant du capteur 6 lorsque celui-ci émet un signal de mesure.

Dit autrement, la réserve d'énergie est chargée par la tension électrique délivrée par le capteur 6 lorsqu'un courant de défaut circule dans le ou les conducteurs 4.

Dans l'exemple suivant, la réserve d'énergie 26 comporte un condensateur.

En pratique, dans certains modes de réalisation, la réserve d'énergie 26 peut recevoir le signal de mesure après traitement ou filtrage de ce dernier par les étages 20, 22, 24, ou à la place recevoir une tension qui est représentative de ce signal de mesure.

Le comparateur 28 est configuré pour comparer le niveau d'énergie stocké dans la réserve d'énergie 26 avec un seul prédéfini et pour générer le signal de déclenchement lorsque le niveau d'énergie stocké dépasse la valeur prédéfinie.

Par exemple, pour ce faire, le comparateur 28 est connecté avec la réserve d'énergie 26 et compare la tension aux bornes de la réserve d'énergie 26 avec un seuil de tension prédéfini.

Ainsi, lorsqu'un certain niveau d'énergie est stocké dans la réserve d'énergie 26, une condition de déclenchement est considérée comme étant identifiée par le circuit de traitement 8 et un signal de déclenchement est émis. Avantageusement, l'énergie stockée dans la réserve d'énergie 26 est consommée pour déclencher le relais 10.

De cette manière, le circuit de traitement 8 est capable de réagir rapidement à l'apparition d'un courant de défaut, tout en ne nécessitant que peu d'énergie pour fonctionner. Cela est particulièrement appréciable dans la mesure où, comme expliqué précédemment, l'appareil 2 est autoalimenté en énergie et doit donc présenter une consommation électrique très réduite.

Selon des aspects de l'invention, l'appareil 2 comporte en outre un circuit auxiliaire 30 qui est configuré pour inhiber temporairement le déclenchement de l'appareil 2 en cas d'apparition d'un défaut électrique.

Avantageusement, l'inhibition est assurée en consommant une partie de l'énergie stockée dans la réserve d'énergie 26 suite à la détection d'un courant de défaut.

Dans l'exemple illustré, le circuit 30 comporte un module 32 de détection, un module 34 de génération d'un retard et un module 36 pour déclencher la consommation d'une quantité prédéfinie d'énergie dans la réserve d'énergie 26.

Le circuit auxiliaire 30 peut être associé au circuit de traitement 8 ou faire partie du circuit de traitement 8.

Par exemple, le module de détection 32 est configuré pour détecter une condition de démarrage, afin d'identifier une augmentation du courant de défaut. La condition de démarrage peut être un front d'onde montant de la tension électrique délivrée par le capteur 6, ou le moment à partir duquel la tension électrique reçue est écrêtée par l'étage 22

Le module 34 comporte un générateur d'impulsion configuré pour générer une impulsion, par exemple une impulsion de courant ou de tension électrique, après détection par le module de détection 32 de la condition de démarrage.

De préférence, le module 34 est configuré pour introduire un délai d'attente prédéfini après détection par le module de détection 32 de la condition de démarrage avant de générer l'impulsion.

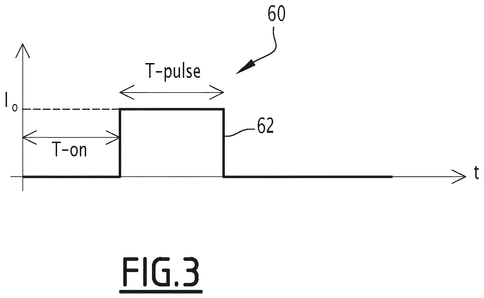

Dans l'exemple illustré par le graphique 60 de la figure 3, le module 34 génère une impulsion 62 de courant ou de tension pendant une durée prédéfinie « T-pulse » après un retard prédéfini « T-on » décompté à partir du moment où le module 32 détecte la condition de démarrage.

La référence « I₀ » désigne l'amplitude de l'impulsion, qui en pratique peut être choisie arbitrairement. En dehors de la durée T-pulse, le courant ou la tension du signal en sortie du module 34 reste nul.

Par exemple, les valeurs de la durée prédéfinie « T-pulse » et du retard prédéfini « T-on » peuvent être enregistrées dans une mémoire du circuit auxiliaire 30.

Le module 36 est de préférence configuré pour consommer de l'énergie stockée dans la réserve d'énergie 26 uniquement pendant la durée de l'impulsion générée par le module 34.

Selon des exemples, le module 36 peut comporter une résistance et un interrupteur permettant de connecter ou déconnecter sélectivement la résistance de la réserve d'énergie 26.

Par exemple, l'interrupteur est piloté par l'impulsion générée par le module 34. En pratique, le module 34 peut être couplé à une électrode de commande de l'interrupteur pour envoyer l'impulsion vers ladite électrode de commande afin de piloter l'interrupteur. En présence d'une impulsion, la résistance n'est connectée à la réserve d'énergie 26. En l'absence d'impulsion, la résistance est déconnectée de la réserve d'énergie 26.

Ainsi, la résistance n'est connectée à la réserve d'énergie 26 que pendant la durée de l'impulsion.

Selon des exemples de mise en œuvre, l'interrupteur est un interrupteur mécanique, ou un interrupteur électromécanique tel qu'un relais, ou un interrupteur à l'état solide, tel qu'un transistor.

On comprend que, lorsque la résistance est connectée à la réserve 26, elle dissipe au moins une partie de l'énergie de la réserve 26.

Il est ainsi possible de réduire une quantité d'énergie prédéfinie en choisissant la durée de l'impulsion et le dimensionnement de la résistance.

Selon des modes de mise en œuvre, qui seront mieux compris à la lecture des exemples qui vont suivre, le circuit auxiliaire 30 peut être implémenté par un ou plusieurs circuits électroniques comportant un ou plusieurs composants discrets analogiques et/ou un ou plusieurs circuits intégrés et/ou un processeur, tel qu'un microcontrôleur.

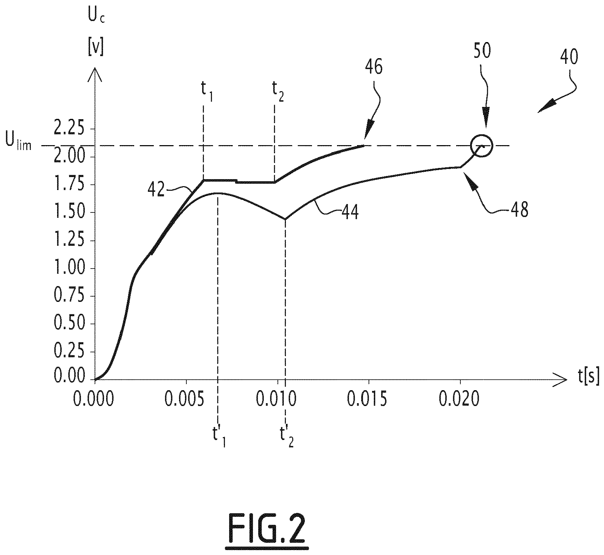

Un exemple de fonctionnement du circuit auxiliaire 30 est expliqué en référence à la figure 2.

Le graphique 40 illustre l'évolution de la tension électrique aux bornes de la réserve d'énergie 26 (axe des ordonnées, exprimée en volts et notée U_{c}) en fonction du temps (axe des abscisses, exprimé en secondes et noté « t »), pour un premier exemple dans lequel le circuit auxiliaire 30 n'est pas utilisé (courbe 42), et un deuxième exemple dans lequel le circuit auxiliaire 30 est utilisé (courbe 44).

Dans le premier exemple, un courant électrique est mesuré par le capteur 6, qui génère une tension électrique correspondante en entrée du circuit de traitement 8. Une partie de la puissance électrique correspondante est consommée par le circuit de traitement 8 pour son fonctionnement, et l'autre partie recharge partiellement la réserve d'énergie 26, ce qui se traduit par une augmentation de la tension électrique aux bornes de la réserve d'énergie 26, comme visible sur la courbe 42.

Cette augmentation n'est cependant pas constante, notamment à cause du comportement du capteur 6 et de la consommation électrique du circuit de traitement 8, et de la périodicité du courant primaire.

Dans l'exemple illustré, la tension U_{c} augmente jusqu'à un premier instant t₁, à partir duquel le tore magnétique du capteur 6 arrive à saturation. Cela correspond à la première phase de fonctionnement du capteur 6 mentionnée précédemment.

La tension U_{c} se stabilise ensuite, voire décroît légèrement, puisque la puissance électrique délivrée par le capteur 6 est alors essentiellement consommée par le circuit de traitement 8 pour assurer son fonctionnement.

Ensuite, à partir d'un second instant t₂, correspondant à la fin de la première demi-période du courant primaire, ici égale à 10ms, la tension U_{c} augmente à nouveau, correspondant à la deuxième phase de fonctionnement du capteur 6 mentionnée précédemment.

L'augmentation de la tension U_{c} se poursuit jusqu'à atteindre (flèche 46) le seuil de tension prédéfini Uₗᵢₘ du comparateur 28. Le signal de déclenchement est alors émis.

En pratique, il est souhaitable d'éviter un tel comportement, dans la mesure où cela peut conduire à un déclenchement intempestif ou non justifié de l'appareil 2, ce qui peut être préjudiciable au bon fonctionnement de l'installation électrique.

Dans cette situation, une simple demi-onde sinusoïdale de courant peut suffire à déclencher l'appareil 2, ce qui n'est pas souhaitable pour les appareils devant répondre à certaines contraintes normatives, tels les appareils de protection différentielle dits de type F (par exemple tel que défini par la norme IEC62423) et de type G (par exemple tel que défini par la norme autrichienne OVE E 8601).

Le circuit auxiliaire 30 permet de résoudre ces inconvénients, comme cela est illustré par le deuxième exemple.

Dans le deuxième exemple, à l'instar du premier exemple, lorsqu'un courant électrique de défaut différentiel est mesuré par le capteur 6, une partie de la puissance électrique fournie par le capteur 6 est utilisée pour charger la réserve d'énergie 26, ce qui se traduit par une augmentation de la tension U_{c}, comme visible sur la courbe 44.

De la même façon que dans le premier exemple, la tension U_{c} augmente jusqu'à un premier instant t₁, à partir duquel le tore magnétique du capteur 6 arrive à saturation.

Cependant, dans le deuxième exemple, le circuit auxiliaire 30 intervient temporairement pour consommer une partie de l'énergie stockée dans la réserve 26. Cette consommation se traduit par une diminution de la tension U_{c} entre les instants t'₁ et t'₂.

Ainsi, à la fin de la demi-période de l'onde de courant primaire, correspondant à l'instant t₂, le niveau d'énergie stockée dans la réserve 26 a suffisamment baissé pour que l'apport d'énergie supplémentaire causé par le déchargement du tore (pendant la deuxième phase de fonctionnement du capteur 6) ne permette pas d'atteindre le seuil de tension Uₗᵢₘ.

Un déclenchement intempestif de l'appareil 2 est alors évité.

Toutefois, le niveau d'énergie stockée dans la réserve 26 reste suffisamment élevé pour garantir le déclenchement de l'appareil 2 si une deuxième onde de courant est reçue immédiatement après. Une telle deuxième onde de courant est en effet révélatrice de la présence d'un défaut électrique justifiant le déclenchement de l'appareil 2.

Dans l'exemple illustré, la flèche 48 indique une nouvelle augmentation de la tension U_{c} causée par une telle deuxième onde de courant, ce qui conduit au déclenchement de l'appareil 2 lorsque la tension U_{c} atteint le seuil de tension Uₗᵢₘ, comme illustré indiqué par la flèche 50.

Grâce au circuit auxiliaire 30, l'appareil 2 est capable de réagir à l'apparition d'un défaut électrique avec un temps de réponse très court, tout en étant immunisé contre des déclenchements prématurés ou inutiles causés par des phénomènes électriques parasites de courte durée.

Plus précisément, l'ajout d'une surconsommation temporaire d'énergie par le circuit de traitement permet de diminuer de façon contrôlée la quantité d'énergie stockée dans la réserve d'énergie, et donc de retarder l'émission d'un signal de déclenchement. Cela permet d'éviter un déclenchement intempestif de l'appareil causé par des phénomènes parasites de courte durée, tout en garantissant qu'un signal de déclenchement sera néanmoins émis en cas de défaut avéré.

Un tel fonctionnement est particulièrement adapté pour les appareils de protection différentielle autoalimentés, dans lesquels la détection du courant de défaut est assurée par accumulation grâce à la réserve d'énergie (appareils dits de type VI pour « Voltage Independent » en anglais). Le circuit auxiliaire 30 peut être implémenté simplement, en ne consommant que peu d'énergie, et sans avoir besoin de modifier en profondeur les architectures existantes des appareils de protection différentielle.

Comme expliqué précédemment, la quantité d'énergie consommée dans la réserve 26 peut être réglée à l'avance, notamment en choisissant des valeurs appropriées du retard et/ou de la durée de l'impulsion et/ou de résistance.

Par exemple, le retard prédéfini « T-on » est compris entre 1ms et 4ms, par exemple égal à 2ms. Selon des exemples, la durée T-pulse de l'impulsion peut être comprise entre 2ms et 5ms

Selon des exemples, la valeur de résistance R_{T} de la résistance du module 36 peut être comprise entre 1 kΩ et 100kΩ.

En pratique, la consommation d'énergie dans la réserve 26 peut n'être active qu'après la saturation du capteur 6 (c'est-à-dire entre les instants t₁ et t₂), ou uniquement avant la saturation du capteur 6 (c'est-à-dire avant l'instant t₁), ou sur une plage de temps recoupant ces différentes phases de fonctionnement.

D'autres valeurs peuvent être choisies en fonction des caractéristiques de l'appareil 2 et des circonstances d'utilisation.

En instaurant le délai prédéfini avant de déclencher la surconsommation d'énergie, on permet au circuit de traitement 8 de prélever une partie de la puissance provenant du capteur pour assurer son fonctionnement, puissance qui serait autrement être dissipée par le module 36.

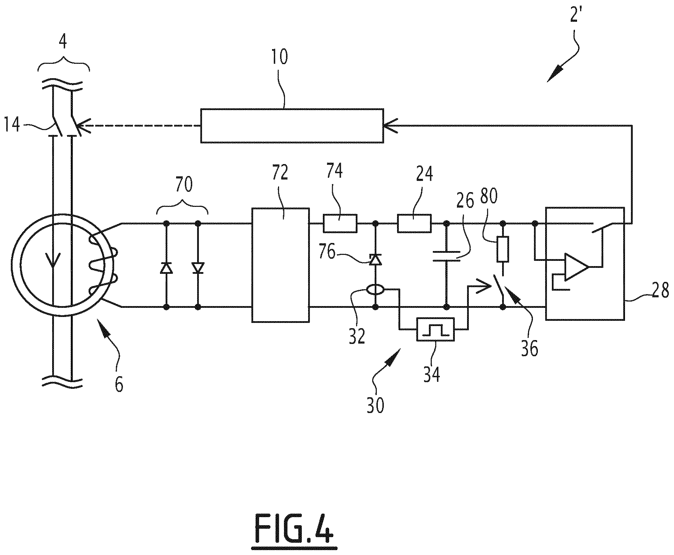

La figure 4 illustre un exemple de réalisation du circuit de traitement 8, comportant notamment deux diodes de protection 70 qui implémentent la fonction de protection de l'étage 20 précédemment décrit, ainsi qu'une carte électronique 72 qui implémente les fonctions d'accord et de redressement des étages 20 et 22.

Le circuit de traitement 8 comporte en outre une première résistance 74 et une diode Zéner 76 connectées en amont de la réserve d'énergie 26, qui peuvent implémenter des fonctions du module d'écrêtage 22.

Par exemple, la diode Zéner 76 limite la tension aux bornes de la réserve d'énergie 26 dans des cas de fort courant différentiel. Dans cet exemple, la référence 80 désigne la résistance de tirage du module 36.

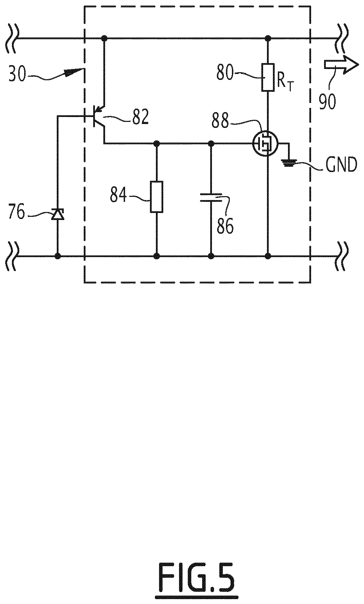

La figure 5 représente un exemple plus détaillé de construction du circuit auxiliaire 30, donné à titre illustratif, étant entendu que d'autres modes de réalisation sont possibles.

Dans cet exemple, donné uniquement à des fins d'illustration, le circuit auxiliaire 30 comporte la résistance de tirage 80, un premier transistor 82, une résistance 84, un condensateur 86, et un deuxième transistor 88. Les bornes de sortie du circuit 30 (flèche 90) sont connectées à la réserve d'énergie 26. La référence GND désigne une masse électrique de l'appareil 2.

Le transistor 82 est connecté à la diode Zéner 76 et au circuit RC formé par l'association en parallèle de la résistance 84 et du condensateur 86, ce circuit étant connecté à une électrode de commande du transistor 88. Le transistor 88 est connecté à la résistance 80 et joue le rôle de l'interrupteur du module 36.

Lorsque la diode Zéner 76 devient conductrice, elle ferme le transistor 82. Le condensateur 86 se charge pendant la durée de retard T-on, dont la valeur est définie par la résistance et la capacité de la résistance 84 et du condensateur 86.

Ensuite, le condensateur 86 se décharge en appliquant une tension aux bornes de l'électrode de commande du transistor 88.

Le transistor 88 passe dans l'état fermé, mettant ainsi la résistance 80 en connexion avec la réserve d'énergie 26, permettant de consommer, par dissipation thermique, une partie de l'énergie électrique stockée dans la réserve 26.

Selon d'autres modes de réalisation, le circuit auxiliaire 30 peut être implémenté différemment, par exemple au moyen d'un microcontrôleur associé à une résistance 80 couplée à un interrupteur.

Dans le cas où le circuit de traitement 8 est au moins en partie implémenté par un microcontrôleur ou par tout processeur équivalent, alors le circuit auxiliaire 30 peut être implémenté en utilisant ce même microcontrôleur ou ce processeur.

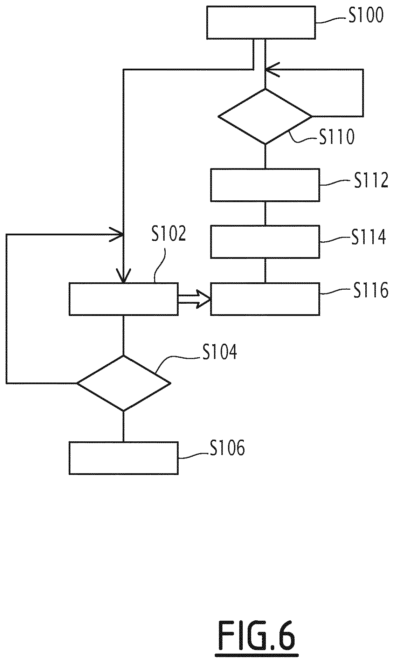

Un exemple de fonctionnement de l'appareil 2 est maintenant décrit en référence à la figure 6.

Le procédé démarre à l'étape S100 avec l'apparition d'un courant de défaut différentiel dans le ou les conducteurs 4. Le capteur 6 détecte ce courant de défaut et génère une tension électrique correspondante.

A l'étape S102, la réserve d'énergie 26 est chargée par une partie de la tension électrique correspondante reçue depuis le capteur 6.

A l'étape S104, qui peut être répétée en continue ou périodiquement, le comparateur 28 vérifie si le niveau d'énergie électrique stockée dans la réserve d'énergie 26 atteint le seuil prédéfini.

Si cette condition est remplie, l'appareil 2 est déclenché lors d'une étape S106.

Si cette condition n'est pas remplie, le procédé retourne à l'étape S102 et l'étape S104 est répétée.

En parallèle, et tant que l'appareil 2 n'est pas déclenché, la tension reçue est détectée par le circuit auxiliaire 30.

Par exemple, lors d'une étape S110, le module 32 vérifie si la condition de la tension reçue est écrêtée par la diode Zéner 76.

A l'étape S112, le module 32 détecte si une condition de démarrage est remplie.

Comme expliqué précédemment, cette condition de démarrage peut correspondre à la détection d'un front d'onde montant, pouvant correspondre au passage vers un état conducteur de la diode d'écrêtage 76 de l'étage d'écrêtage 22.

Dès que la condition de démarrage est détectée, le circuit auxiliaire 30 commence à décompter la durée d'attente « T-on » (étape S112).

A la fin de la durée d'attente « T-on », le module 34 génère une impulsion courant pendant une durée T-pulse (étape S114).

A l'étape S116, en réponse à l'impulsion générée par le module 34, le module 36 consomme une quantité d'énergie prédéfinie stockée dans la réserve 26. Par exemple, l'interrupteur du module 36 est fermé pour connecter la résistance 80 avec la réserve 26 pendant toute la durée de l'impulsion. A la fin de l'impulsion, l'interrupteur 36 est rouvert et la résistance 80 est déconnectée. Le procédé retourne à l'étape S110.

En variante, les étapes pourraient être exécutées dans un ordre différent. Certaines étapes pourraient être omises. L'exemple décrit ne fait pas obstacle à ce que, dans d'autres modes de réalisation, d'autres étapes soient mises en œuvre conjointement et/ou séquentiellement avec les étapes décrites.

Toute caractéristique de l'un des modes de réalisation ou variante décrite ci-dessus, peut être mise en œuvre dans les autres modes de réalisation et variantes décrits conformément aux revendications.

## Revendications

1. Appareil de protection électrique (2) pour détecter un défaut différentiel entre deux conducteurs électriques (4), cet appareil de protection (2) comportant :
- un capteur de courant (6), le capteur de courant (6) comprenant un tore magnétique autour duquel est enroulé une bobine ;
**caractérisé par**:
- une réserve d'énergie (26) connectée au capteur de courant, la réserve d'énergie (26) étant configurée pour être chargée par la tension électrique délivrée par le capteur de courant (6) pendant une première phase de fonctionnement lorsqu'un courant de défaut circule dans le ou les conducteurs électriques (4) ;
- un circuit de traitement (8) configuré pour identifier (S106) une condition de déclenchement lorsque l'énergie stockée dans la réserve d'énergie (26) dépasse un seuil prédéfini (Uₗᵢₘ) ;
l'appareil de protection étant configuré pour :
- mesurer (S100) un courant de défaut différentiel au moyen du capteur de courant (6),
- détecter (S112) l'apparition d'un courant de défaut mesuré par le capteur de courant (6),
- en réponse, consommer (S116) une quantité prédéfinie d'énergie stockée dans la réserve d'énergie pendant une deuxième phase de fonctionnement du capteur de courant (6) après que le tore magnétique du capteur de courant (6) soit arrivé à saturation.

2. Appareil de protection électrique (2) selon la revendication 1, lequel étant configuré pour, suite à la détection de l'apparition d'un courant de défaut, attendre (S114) pendant une durée de retard prédéterminée (T-on) avant de commencer à consommer (S116) une quantité prédéfinie d'énergie stockée dans la réserve d'énergie.

3. Appareil de protection électrique (2) selon la revendication 2, dans lequel la durée de retard prédéterminée (T-on) est comprise entre 1ms et 4ms, de préférence égale à 2ms.

4. Appareil de protection électrique (2) selon l'une quelconque des revendications précédentes, lequel étant configuré pour consommer (S116) la quantité prédéfinie d'énergie stockée dans la réserve d'énergie seulement pendant une durée prédéfinie (T-pulse).

5. Appareil de protection électrique (2) selon l'une quelconque des revendications précédentes, dans lequel l'appareil comporte une résistance et un interrupteur (36) configuré pour sélectivement connecter la résistance à la réserve d'énergie (26), pour consommer (S116) ladite quantité prédéfinie d'énergie stockée dans la réserve d'énergie.

6. Appareil de protection électrique (2) selon la revendication 5, lequel comporte en outre un générateur d'impulsion (34) couplé à l'interrupteur (36) et configuré pour connecter la résistance uniquement pendant la durée d'une impulsion émise par le générateur d'impulsion.

7. Appareil de protection électrique (2) selon l'une quelconque des revendications précédentes, dans lequel le capteur de courant (6) comporte un tore de mesure.

8. Appareil de protection électrique (2) selon l'une quelconque des revendications précédentes, dans lequel la réserve d'énergie (26) comporte un condensateur.

9. Appareil de protection électrique (2) selon l'une quelconque des revendications précédentes, dans lequel l'appareil de protection comporte en outre un mécanisme de commutation (10, 12) configuré pour ouvrir des contacts électriques séparables (14) aptes à être associés à un conducteur électrique d'une installation électrique, ledit mécanisme de commutation étant configuré pour être déclenché lorsque la condition de déclenchement est identifiée.

10. Procédé de détection d'un défaut électrique mis en œuvre par un appareil de protection électrique (2) pour détecter un défaut différentiel entre deux conducteurs électriques (4), le procédé comportant des étapes consistant à :
- mesurer (S100) un courant de défaut différentiel au moyen d'un capteur de courant (6), , le capteur de courant (6) comprenant un tore magnétique autour duquel est enroulé une bobine, l'appareil de protection étant configuré pour identifier une condition de déclenchement lorsque l'énergie stockée dans une réserve d'énergie (26) connectée au capteur de courant (6) dépasse un seuil prédéfini (Uₗᵢₘ), la réserve d'énergie (26) étant configurée pour être chargée par la tension électrique délivrée par le capteur de courant (6) pendant une première phase de fonctionnement lorsqu'un courant de défaut circule dans le ou les conducteurs électriques (4),
- détecter (S112) l'apparition d'un courant de défaut mesuré par le capteur de courant (6),
- en réponse, consommer (S116) une quantité prédéfinie d'énergie stockée dans la réserve d'énergie pendant une deuxième phase de fonctionnement du capteur de courant (6) après que le tore magnétique du capteur de courant (6) soit arrivé à saturation.

## Patentansprüche

1. Elektrisches Schutzgerät (2) zum Erkennen eines Differenzialfehlers zwischen zwei elektrischen Leitern (4), dieses Schutzgerät (2) umfassend:
- einen Stromsensor (6), der Stromsensor (6) umfassend einen magnetischen Torus, um den eine Spule gewickelt ist;
**gekennzeichnet durch**:
- eine Energiereserve (26), die mit dem Stromsensor verbunden ist, wobei die Energiereserve (26) konfiguriert ist, um durch die elektrische Spannung aufgeladen zu werden, die von dem Stromsensor (6) während einer ersten Betriebsphase zugeführt wird, wenn ein Fehlerstrom durch den oder die elektrischen Leiter (4) fließt;
- eine Verarbeitungsschaltung (8), die konfiguriert ist, um eine Auslösebedingung zu identifizieren (S106), wenn die in der Energiereserve (26) gespeicherte Energie einen vordefinierten Schwellenwert (Uₗᵢₘ) überschreitet;
wobei die Schutzvorrichtung zu Folgendem konfiguriert ist:
- Messen (S100) eines Differenzfehlerstroms mittels des Stromsensors (6),
- Erkennen (S112) des Auftretens eines Fehlerstroms, der von dem Stromsensor (6) gemessen wird,
- als Reaktion darauf, Aufnehmen (S116) einer vordefinierten Menge an Energie, die in der Energiereserve gespeichert ist, während einer zweiten Betriebsphase des Stromsensors (6), nachdem der magnetische Torus des Stromsensors (6) in Sättigung gelangt ist.

2. Elektrisches Schutzgerät (2) nach Anspruch 1, das konfiguriert ist, um nach dem Erkennen des Auftretens eines Fehlerstroms über eine vorbestimmte Verzögerungszeit (T-on) zu warten (S114), bevor es mit der Aufnahme (S116) einer vorbestimmten Menge der in der Energiereserve gespeicherten Energie beginnt.

3. Elektrisches Schutzgerät (2) nach Anspruch 2, wobei die vorbestimmte Verzögerungszeit (T-on) zwischen 1 ms und 4 ms liegt, vorzugsweise 2 ms ist.

4. Elektrisches Schutzgerät (2) nach einem der vorherigen Ansprüche, das konfiguriert ist, um die vordefinierte Menge der in der Energiereserve gespeicherten Energie nur während einer vordefinierten Zeitdauer (T-Puls) aufzunehmen (S116).

5. Elektrisches Schutzgerät (2) nach einem der vorhergehenden Ansprüche, wobei das Gerät einen Widerstand und einen Schalter (36) umfasst, der konfiguriert ist, um den Widerstand selektiv mit der Energiereserve (26) zu verbinden, um die vordefinierte Menge der in der Energiereserve gespeicherten Energie aufzunehmen (S116).

6. Elektrisches Schutzgerät (2) nach Anspruch 5, das ferner einen Impulsgenerator (34) umfasst, der mit dem Schalter (36) gekoppelt und konfiguriert ist, um den Widerstand nur während der Dauer eines von dem Impulsgenerator emittierten Impulses zu verbinden.

7. Elektrisches Schutzgerät (2) nach einem der vorherigen Ansprüche, wobei der Stromsensor (6) einen Messtorus umfasst.

8. Elektrisches Schutzgerät (2) nach einem der vorherigen Ansprüche, wobei die Energiereserve (26) einen Kondensator umfasst.

9. Elektrisches Schutzgerät (2) nach einem der vorherigen Ansprüche, wobei das Schutzgerät ferner einen Schaltmechanismus (10, 12) umfasst, der konfiguriert ist, um trennbare elektrische Kontakte (14) zu öffnen, die geeignet sind, um mit einem elektrischen Leiter einer elektrischen Installation assoziiert zu werden, wobei der Schaltmechanismus konfiguriert ist, um ausgelöst zu werden, wenn die Auslösebedingung identifiziert wird.

10. Verfahren zur Erkennung eines elektrischen Fehlers, das von einem elektrischen Schutzgerät (2) durchgeführt wird, um einen Differenzialfehler zwischen zwei elektrischen Leitern (4) zu erkennen, das Verfahren umfassend Schritte, die aus Folgendem bestehen:
- Messen (S100) eines Differenzfehlerstroms mittels eines Stromsensors (6), , der Stromsensor (6) umfassend einen magnetischen Torus, um den eine Spule gewickelt ist, wobei das Schutzgerät konfiguriert ist, um eine Auslösebedingung zu identifizieren, wenn die in einer mit dem Stromsensor (6) verbundenen Energiereserve (26) gespeicherte Energie einen vordefinierten Schwellenwert (Uₗᵢₘ) überschreitet, wobei die Energiereserve (26) konfiguriert ist, um durch die elektrische Spannung aufgeladen zu werden, die von dem Stromsensor (6) während einer ersten Betriebsphase zugeführt wird, wenn ein Fehlerstrom durch den oder die elektrischen Leiter (4) fließt,
- Erkennen (S112) des Auftretens eines Fehlerstroms, der von dem Stromsensor (6) gemessen wird,
- als Reaktion darauf, Aufnehmen (S116) einer vordefinierten Menge an Energie, die in der Energiereserve gespeichert ist, während einer zweiten Betriebsphase des Stromsensors (6), nachdem der magnetische Torus des Stromsensors (6) in Sättigung gelangt ist.

## Claims

1. An electrical protection device (2) for detecting a differential fault between two electrical conductors (4), this protection device (2) comprising:
- a current sensor (6), the current sensor (6) comprising a magnetic toroid around which a coil is wound;
**characterised by**:
- an energy reserve (26) connected to the current sensor, the energy reserve (26) being configured to be charged by the electrical voltage supplied by the current sensor (6) during a first operating phase when a fault current flows in the electrical conductor or conductors (4);
- a processing circuit (8) configured to identify (S106) a triggering condition when the energy stored in the energy reserve (26) exceeds a predefined threshold (Uₗᵢₘ); the protection device being configured to:
- measure (S100) a differential fault current using the current sensor (6),
- detect (S112) the occurrence of a fault current measured by the current sensor (6),
- in response, consume (S116) a predefined amount of energy stored in the energy reserve during a second operating phase of the current sensor (6) after the magnetic toroid of the current sensor (6) has reached saturation.

2. An electrical protection device (2) according to claim 1, which is configured so as, following detection of the occurrence of a fault current, to wait (S114) for a predetermined delay time (T-on) before beginning to consume (S116) a predefined quantity of energy stored in the energy reserve.

3. An electrical protection device (2) according to claim 2, in which the predetermined delay time (T-on) is between 1ms and 4ms, preferably equal to 2ms.

4. An electrical protection device (2) according to any one of the preceding claims, which is configured to consume (S116) the predefined amount of energy stored in the energy store only for a predefined duration (T-pulse).

5. An electrical protection device (2) according to any one of the preceding claims, wherein the device comprises a resistor and a switch (36) configured to selectively connect the resistor to the energy reserve (26), to consume (S116) said predefined quantity of energy stored in the energy reserve.

6. An electrical protection device (2) according to claim 5, which further comprises a pulse generator (34) coupled to the switch (36) and configured to connect the resistor only for the duration of a pulse emitted by the pulse generator.

7. An electrical protection device (2) according to any of the preceding claims, in which the current sensor (6) comprises a measuring toroid.

8. An electrical protection device (2) according to any of the preceding claims, in which the energy reserve (26) comprises a capacitor.

9. An electrical protection device (2) according to any one of the preceding claims, wherein the protection device further comprises a switching mechanism (10, 12) configured to open selectable electrical contacts (14) capable of being associated with an electrical conductor of an electrical installation, said switching mechanism being configured to be triggered when the trigger condition is identified.

10. A method of detecting an electrical fault implemented by an electrical protection device (2) to detect a differential fault between two electrical conductors (4), the method comprising steps consisting of:
- measure (S100) a differential fault current by means of a current sensor (6), , the current sensor (6) comprising a magnetic toroid around which is wound a coil is wound around, the protection device being configured to identify a tripping condition when the energy stored in an energy reserve (26) connected to the current sensor (6) exceeds a predefined threshold (Uₗᵢₘ), the energy reserve (26) being configured to be charged by the electric voltage delivered by the current sensor (6) during a first operating phase when a fault current flows in the electrical conductors (4),
- detect (S112) the occurrence of a fault current measured by the current sensor (6),
- in response, consume (S116) a predefined amount of energy stored in the energy reserve during a second operating phase of the current sensor (6) after the magnetic toroid of the current sensor (6) has reached saturation.
